# EUROPEAN PATENT SPECIFICATION

(11) **EP 3 107 385 B1**
(45) Date of publication and mention of the grant of the patent: **14.03.2018**
(21) Application number: 15701705.4
(22) Date of filing: 14.01.2015
(51) Int. Cl.: A01N 25/04, A01N 43/56, A01N 47/24, A01N 37/46

(54) **AQUEOUS AGROFORMULATION COMPRISING SUSPENDED PESTICIDE, CELLULOSE ETHER AND THICKENER**
WÄSSRIGE AGROFORMULIERUNG ENTHALTEND SUSPENDIERTES PESTIZID, CELLULOSEETHER UND VERDICKUNGSMITTEL
AGROFORMULATION AQUEUSE COMPRENANT UN PESTICIDE EN SUSPENSION, ÉTHER DE CELLULOSE ET AGENT ÉPAISSISSANT

(30) Priority: 21.02.2014 EP 14156074
(43) Date of publication of application: 28.12.2016
(73) Proprietor: BASF SE, 67056 Ludwigshafen am Rhein (DE)
(72) Inventor: KLIMOV, Evgueni, 67071 Ludwigshafen (DE); KLAMCZYNSKI, Katharine, 67459 Böhl-Iggelheim (DE)
(74) Representative: BASF IP Association
(86) International application number: PCT/EP2015/050575
(87) International publication number: WO 2015/124330

(56) References cited:
- EP-A1- 2 659 774
- EP-A1- 2 659 775
- EP-A1- 2 659 776
- EP-A2- 0 496 269
- US-A- 4 107 292
- US-B1- 6 576 048

## Description

The present invention relates to an aqueous composition comprising a water-insoluble pesticide in form of suspended particles, a cellulose ether selected from methylhydroxypropyl cellulose, and a thickener selected from inorganic clays or polysaccharides which are different from the cellulose ether. The invention furthermore relates to a process for the preparation of this composition; to a method of controlling phytopathogenic fungi and/or undesired plant growth and/or undesired insect or mite attack and/or for regulating the growth of plants, wherein the composition is allowed to act on the respective pests, their environment or the plants to be protected from the respective pest, on the soil and/or on undesired plants and/or on the crop plants and/or their environment; and furthermore to seed comprising the composition. The present invention comprises combinations of preferred features with other preferred features.
Storage stability of suspended pesticide particles is a common problem in agrochemical formulation. Several additives and methods are known which try to avoid such problems. However, there is still the need to further improve the storage stability of such formulaitons.
EP2659774 discloses new antimicrobial compositions to control plant diseases and to prevent microbial spoilage of crops. Methylhydroxyethylcellulose is disclosed as an additive for the antimicrobial compositions.
Disadvantages of the prior art are, inter alia, that no high storage stability of the formulation is achieved; that the particle size growth of the suspended agrochemical active substances is not slowed down or suppressed; that the agglomeration of suspended agrochemical active substances is not slowed down or suppressed; that the settling of suspended agrochemical active substances is not slowed down or suppressed. It was therefore an object to overcome these disadvantages.
The object was achieved by an aqueous composition comprising
- a water-insoluble pesticide in form of suspended particles,
- a cellulose ether selected from methylhydroxypropyl cellulose, and
- a thickener selected from inorganic clays or polysaccharides which are different from the cellulose ether

**Cellulose ether** are generally known compounds which are commercially available as Methocel® from Dow Chemical Company, or as Culminal® from Hercules. They may be prepared by etherification of the polysaccharide cellulose. The manufacturing process may be carried out in either one of several steps. The reactions usually taking place are alkalization and alkylation. These reactions can be carried out in the presence or absence of solvents. Pure cellulose has large crystalline regions due to hydrogen- bonded hydroxyl groups and is thus insoluble in water and in most organic solvents. In the first step of cellulose ether manufacturing, cellulose may be activated with sodium hydroxide to become alkali cellulose. In some processes, alkali cellulose is degraded oxidatively much more rapidly than cellulose. Controlled reduction of the degree of polymerization allows for adjustment of the solution viscosities of the final products. By the selection of the substituent, the type of cellulose ether is determined. Mixed ethers can be produced with a mixture of reactants or by stepwise addition of the substituents. This reaction step may be carried out under pressure and at increased temperature. Alkylation may be carried out with alkyl halides. With epoxides, the process is called alkoxylation. As with all polymer reactions, this reaction may not occur uniformly along the polymer chain.

The cellulose ether may have **solubility in water** at 20 °C of at least 3 g/l, preferably of at least 10 g/l, and in particular of at least 20 g/l.

The molecular weight of cellulose ether is usually determined by it kinematic or dynamic viscosity. Lower viscosities mean typically lower molecular weight of the cellulose ether.

The cellulose ether may have a **kinematic viscosity** of up to 500 mPas, preferably of up to 50 mPas, more preferably up to 10 mPas, and in particular of up to 5 mPas at 20 °C. The kinematic viscosity may be determined according to Ubbelohde at 20 °C with a 2 wt% (dry cellolose ether) aqueous solution.

The cellulose ether may have a **dynamic viscosity** of up to 500 mPas, preferably of up to 50 mPas, more preferably up to 10mPas, and in particular of up to 5 mPas at 20 °C. The dynamic viscosity may be determined according to Hoeppler at 20 °C with a 2 wt% (cellolose ether with 5% humidity) aqueous solution.

The cellulose ether may have a **Brookfield viscosity** of up to 200 mPas, preferably of up to 100 mPas, more preferably up to 40 mPas, and in particular of up to 20 mPas at 20 °C. The dynamic viscosity may be determined according to Brookfield at 20 °C with a 2 wt% aqueous solution at 20 rpm.

The cellulose ether may contain 15 to 40 wt%, preferably 22 to 35 wt%, and in particular 26 to 32 wt% **methoxy groups.**

The cellulose ether may contain 3 to 30 wt%, preferably 4 to 20 wt%, and in particular 5 to 14 wt% **hydroxypropoxy groups.**

The composition comprises usually 2 to 100 g/l, preferably 4 to 50 g/l, and in particular 5 to 30 g/l of the cellulose ether.

The **thickener** is selected from inorganic clays or polysaccharides which are different from the cellulose ether. Mixture of any of the aforementioned thickener are also suitable

Suitable **inorganic clays** are bentonite clay (e.g. VANATURAL®), magnesium aluminum silicate (e.g. VEEGUM®, Attaclay®) and smectite clays (e.g. VAN GEL®).

The thickener is preferably selected from **polysaccharides** which are different from the cellulose ether. Preferred polysaccharides are polysaccharide gums (e.g. gellan gum, jelutong gum, xanthan gum, guar gum, gum arabic, gum tragacanth, gum karya, tara gum, locust gum, agar agar, carrageenan, alginic acid, alginates (e.g. sodium, potassium, ammonium, or calcium)), starch and its derivatives. Mixture of any of the aforementioned thickener are also suitable. Preferred thickeners are polysaccharide gums. The thickener is in particular selected from xanthan gum.

The composition may comprise up to 10 g/l, preferably up to 5 g/l, and in particular up to 2 g/l of the thickener.

The term **pesticide** refers to at least one active substance selected from the group of the fungicides, insecticides, nematicides, herbicides, safeners, biopesticides and/or growth regulators. Preferred pesticides are fungicides, insecticides, herbicides and growth regulators. Especially preferred pesticides are fungicides. Mixtures of pesticides of two or more of the abovementioned classes may also be used. The skilled worker is familiar with such pesticides, which can be found, for example, in the Pesticide Manual, 16th Ed. (2013), The British Crop Protection Council, London. Suitable insecticides are insecticides from the class of the carbamates, organophosphates, organochlorine insecticides, phenylpyrazoles, pyrethroids, neonicotinoids, spinosins, avermectins, milbemycins, juvenile hormone analogs, alkyl halides, organotin compounds nereistoxin analogs, benzoylureas, diacylhydrazines, METI acarizides, and insecticides such as chloropicrin, pymetrozin, flonicamid, clofentezin, hexythiazox, etoxazole, diafenthiuron, propargite, tetradifon, chlorofenapyr, DNOC, buprofezine, cyromazine, amitraz, hydramethylnon, acequinocyl, fluacrypyrim, rotenone, or their derivatives. Suitable fungicides are fungicides from the classes of dinitroanilines, allylamines, anilinopyrimidines, antibiotics, aromatic hydrocarbons, benzenesulfonamides, benzimidazoles, benzisothiazoles, benzophenones, benzothiadiazoles, benzotriazines, benzyl carbamates, carbamates, carboxamides, carboxylic acid diamides, chloronitriles cyanoacetamide oximes, cyanoimidazoles, cyclopropanecarboxamides, dicarboximides, dihydrodioxazines, dinitrophenyl crotonates, dithiocarbamates, dithiolanes, ethylphosphonates, ethylaminothiazolecarboxamides, guanidines, hydroxy-(2-amino)pyrimidines, hydroxyanilides, imidazoles, imidazolinones, inorganic substances, isobenzofuranones, methoxyacrylates, methoxycarbamates, morpholines, N-phenylcarbamates, oxazolidinediones, oximinoacetates, oximinoacetamides, peptidylpyrimidine nucleosides, phenylacetamides, phenylamides, phenylpyrroles, phenylureas, phosphonates, phosphorothiolates, phthalamic acids, phthalimides, piperazines, piperidines, propionamides, pyridazinones, pyridines, pyridinylmethylbenzamides, pyrimidinamines, pyrimidines, pyrimidinonehydrazones, pyrroloquinolinones, quinazolinones, quinolines, quinones, sulfamides, sulfamoyltriazoles, thiazolecarboxamides, thiocarbamates, thiophanates, thiophenecarboxamides, toluamides, triphenyltin compounds, triazines, triazoles. Suitable herbicides are herbicides from the classes of the acetamides, amides, aryloxyphenoxypropionates, benzamides, benzofuran, benzoic acids, benzothiadiazinones, bipyridylium, carbamates, chloroacetamides, chlorocarboxylic acids, cyclohexanediones, dinitroanilines, dinitrophenol, diphenyl ether, glycines, imidazolinones, isoxazoles, isoxazolidinones, nitriles, N-phenylphthalimides, oxadiazoles, oxazolidinediones, oxyacetamides, phenoxycarboxylic acids, phenylcarbamates, phenylpyrazoles, phenylpyrazolines, phenylpyridazines, phosphinic acids, phosphoroamidates, phosphorodithioates, phthalamates, pyrazoles, pyridazinones, pyridines, pyridinecarboxylic acids, pyridinecarboxamides, pyrimidinediones, pyrimidinyl(thio)benzoates, quinolinecarboxylic acids, semicarbazones, sulfonylaminocarbonyltriazolinones, sulfonylureas, tetrazolinones, thiadiazoles, thiocarbamates, triazines, triazinones, triazoles, triazolinones, triazolocarboxamides, triazolopyrimidines, triketones, uracils, ureas.

The composition according to the invention comprises a **water-insoluble pesticide.** It may comprise one or more water-insoluble pesticides. The water-insoluble pesticide will in most cases be soluble in water to no more than 10 g/l at 20°C, preferably to no more than 1 g/l and in particular to no more than 0.5 g/l.

The water-insoluble pesticide usually has a **melting point** of above 30°C, preferably above 50°C and specifically above 70°C.

The composition according to the invention usually comprises from 0.5 to 70% by weight, preferably 1 to 50% by weight and in particular 1 to 30% by weight water-insoluble pesticide.

The composition according to the invention is preferably present in the form of an **agrochemical composition.** Examples of types of compositions here are suspensions (SC, OD, FS), or suspoemulsions (SE). The compositions are prepared in a known manner, such as described by Mollet and Grubemann, Formulation technology, Wiley VCH, Weinheim, 2001; or Knowles, New developments in crop protection product formulation, Agrow Reports DS243, T&F Informa, London, 2005.

An example of suspensions (SC, OD, FS) is: 20 parts by weight of the active substances are comminuted in a stirred ball mill, with addition of 10 parts by weight of dispersants and wetters and 70 parts by weight of water or an organic solvent, to give a fine active substance suspension. Upon dilution in water, a stable suspension of the active substance is obtained. The active substance content in the composition is 20% by weight.

Another example of a suspensions (FS) is: In an agitated vessel 1-60 wt% of a pesticide are comminuted with addition of 2-10 wt% dispersants and wetting agents (e.g. sodium lignosulfonate and alcohol ethoxy¬late), 0.1-2 wt% thickener (e.g. xanthan gum) and up to 100 wt% water or an suitable oil to give a fine active substance suspension. Dilution with water gives a stable suspension of the active substance. For FS type composition up to 40 wt% binder (e.g. polyvinylalcohol) is added.

Examples for suitable **auxiliaries** are solvents, liquid carriers, solid carriers or fillers, surfactants, dispersants, emulsifiers, wetters, adjuvants, solubilizers, penetration enhancers, protective colloids, adhesion agents, humectants, repellents, attractants, feeding stimulants, compatibilizers, bactericides, anti-freezing agents, anti-foaming agents, colorants, tackifiers and binders.

Suitable **solvents** and liquid carriers are water and organic solvents, such as mineral oil fractions of medium to high boiling point, e.g. kerosene, diesel oil; oils of vegetable or animal origin; aliphatic, cyclic and aromatic hydrocarbons, e. g. toluene, paraffin, tetrahydronaphthalene, alkylated naphthalenes; alcohols, e.g. ethanol, propanol, butanol, benzylalcohol, cyclohexanol; glycols; DMSO; ketones, e.g. cyclohexanone; esters, e.g. lactates, carbonates, fatty acid esters, gamma-butyrolactone; fatty acids; phosphonates; amines; amides, e.g. N-methylpyrrolidone, fatty acid dimethylamides; and mixtures thereof. Preferred solvent is water. The water content may be at least 20% by weight, preferably at least 40% by weight, and in particular at least 60 wt%.

Suitable **surfactants** are surface-active compounds, such as anionic, cationic, nonionic and amphoteric surfactants, block polymers, polyelectrolytes, and mixtures thereof. Such surfactants can be used as emusifier, dispersant, solubilizer, wetter, penetration enhancer, protective colloid, or adjuvant. Examples of surfactants are listed in McCutcheon's, Vol.1: Emulsifiers & Detergents, McCutcheon's Directories, Glen Rock, USA, 2008 (International Ed. or North American Ed.).

Suitable **anionic** surfactants are alkali, alkaline earth or ammonium salts of sulfonates, sulfates, phosphates, carboxylates, and mixtures thereof. Examples of sulfonates are alkylarylsulfonates, diphenylsulfonates, alpha-olefin sulfonates, lignine sulfonates, sulfonates of fatty acids and oils, sulfonates of ethoxylated alkylphenols, sulfonates of alkoxylated arylphenols, sulfonates of condensed naphthalenes, sulfonates of dodecyl- and tridecylbenzenes, sulfonates of naphthalenes and alkylnaphthalenes, sulfosuccinates or sulfosuccinamates. Examples of sulfates are sulfates of fatty acids and oils, of ethoxylated alkylphenols, of alcohols, of ethoxylated alcohols, or of fatty acid esters. Examples of phosphates are phosphate esters. Examples of carboxylates are alkyl carboxylates, and carboxylated alcohol or alkylphenol ethoxylates.

Suitable **nonionic** surfactants are alkoxylates, N-subsituted fatty acid amides, amine oxides, esters, sugar-based surfactants, polymeric surfactants, and mixtures thereof. Examples of alkoxylates are compounds such as alcohols, alkylphenols, amines, amides, arylphenols, fatty acids or fatty acid esters which have been alkoxylated with 1 to 50 equivalents. Ethylene oxide and/or propylene oxide may be employed for the alkoxylation, preferably ethylene oxide. Examples of N-subsititued fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolyglucosides. Examples of polymeric surfactants are home- or copolymers of vinylpyrrolidone, vinylalcohols, or vinylacetate.

Suitable **cationic** surfactants are quaternary surfactants, for example quaternary ammonium compounds with one or two hydrophobic groups, or salts of long-chain primary amines. Suitable **amphoteric** surfactants are alkylbetains and imidazolines. Suitable **block polymers** are block polymers of the A-B or A-B-A type comprising blocks of polyethylene oxide and polypropylene oxide, or of the A-B-C type comprising alkanol, polyethylene oxide and polypropylene oxide. Suitable **polyelectrolytes** are polyacids or polybases. Examples of polyacids are alkali salts of polyacrylic acid or polyacid comb polymers. Examples of polybases are polyvinylamines or polyethyleneamines.

Suitable **adjuvants** are compounds, which have a negligible or even no pesticidal activity themselves, and which improve the biological performance of the compound I on the target. Examples are surfactants, mineral or vegetable oils, and other auxilaries. Further examples are listed by Knowles, Adjuvants and additives, Agrow Reports DS256, T&F Informa UK, 2006, chapter 5.

Suitable **bactericides** are bronopol and isothiazolinone derivatives such as alkylisothiazolinones and benzisothiazolinones.

Suitable **anti-freezing agents** are ethylene glycol, propylene glycol, urea and glycerin.

Suitable **anti-foaming agents** are silicones, long chain alcohols, and salts of fatty acids.

Suitable **colorants** (e.g. in red, blue, or green) are pigments of low water solubility and watersoluble dyes. Examples are inorganic colorants (e.g. iron oxide, titan oxide, iron hexacyanoferrate) and organic colorants (e.g. alizarin-, azo- and phthalocyanine colorants).

Suitable **tackifiers or binders** are polyvinylpyrrolidons, polyvinylacetates, polyvinyl alcohols, polyacrylates, biological or synthetic waxes, and cellulose ethers.

The composition according to the invention is preferably in the form of an aqueous composition (such as SC or SE), where the water-insoluble pesticide is present in the form of **suspended particles**. The suspended particles may be present in the form of crystalline or amorphous particles which are solid at 20°C. The suspended water-insoluble pesticide usually has a particle size distribution with an x₅₀ value of from 0.1 to 10 µm, preferably 0.2 µm to 5 µm and especially preferably 0.5 µm to 2 µm. The particle size distribution can be determined by laser light diffraction of an aqueous suspension comprising the particles. The sample preparation, for example the dilution to the measuring concentration, will, in this measuring method, depend on the fineness and concentration of the active substances in the suspension sample and on the apparatus used (for example Malvern Mastersizer), inter alia. The procedure should be developed for the system in question and is known to a person skilled in the art.

The active substance concentrations in the ready-to-use preparations can be varied within substantial ranges. In general, they are between 0.0001 and 10%, preferably between 0.01 and 1%. The active substances can also be used successfully in the ultra-low-volume method (ULV), it being possible to apply compositions with more than 95% by weight of active substance, or indeed the active substance without additives. For use in plant protection, the application rates are between 0.001 and 2.0 kg of active substance per ha, preferably between 0.005 and 2 kg per ha, especially preferably between 0.05 and 0.9 kg per ha, in particular between 0.1 and 0.75 kg per ha, depending on the nature of the desired effect. When treating plant propagation materials, for example seed, amounts of active substance of from 0.1 to 1000 g/100 kg of propagation material or seed, preferably from 1 to 1000 g/100 kg, especially preferably from 1 to 100 g/100 kg, in particular from 5 to 100 g/100 kg, will generally be used. When used in the protection of materials or storage materials, the application rate of active substance depends on the nature of the field of application and on the desired effect. Conventional application rates in the protection of materials are, for example, from 0.001 g to 2 kg, preferably from 0.005 to 1 kg, of active substance per cubic meter of treated material.

Substances which may be admixed to the active substances or to the compositions comprising them are various types of oils, or wetters, adjuvants, herbicides, bactericides, other fungicides and/or pesticides, optionally also only just before use (**tankmix**). These agents can be admixed to the compositions according to the invention in the weight ratio 1:100 to 100:1, preferably 1:10 to 10:1. Adjuvants in this sense which are suitable are, in particular: organically modified polysiloxanes, for example Break Thru S 240®; alcohol alkoxylates, for example Atplus® 245, Atplus® MBA 1303, Plurafac® LF 300 and Lutensol® ON 30; EO-PO block polymers, for example Pluronic® RPE 2035 and Genapol® B; alcohol ethoxylates, for example Lutensol® XP 80; and sodium dioctylsulfosuccinate, for example Leophen® RA.

A further subject is a method of **preparing** the composition according to the invention by bringing the alkoxylated polyalkyleneimine and the water-insoluble pesticide into contact, for example by mixing. The abovementioned auxiliaries can optionally also be brought into contact with the composition. Further preparation methods for various types of compositions are as described above.

A further object is a **use** of the cellulose ether for reducing the crystal growth of a water-insoluble pesticide in form of suspended particles in an aqueous composition. Preferred water-insoluble pesticides are as described above. The crystal growth may be determined be the particle size distribution as lined out above.

The present invention furthermore relates to a **method of controlling** phytopathogenic fungi and/or undesirable vegetation and/or undesired insect or mite attack and/or for regulating the growth of plants, wherein the composition according to the invention is allowed to act on the respective pests, their environment or the crop plants to be protected from the respective pest, on the soil and/or on undesired plants and/or on the crop plants and/or on their environment.

The term **crop plants** also includes those plants which have been modified by breeding, mutagenesis or recombinant methods, including the biotechnological agricultural products which are on the market or in the process of being developed. Genetically modified plants are plants whose genetic material has been modified in a manner which does not occur under natural conditions by hybridizing, mutations or natural recombination (i.e. recombination of the genetic material). Here, one or more genes will, as a rule, be integrated into the genetic material of the plant in order to improve the plant's properties. Such genetic modifications also comprise posttranslational modifications of proteins, oligo- or polypeptides, for example by means of glycosylation or binding of polymers such as, for example, prenylated, acetylated or farnesylated residues or PEG residues.

A further subject matter is **seed** comprising the composition according to the invention. To treat plant propagation materials, in particular seed, it is customary to use suspensions (FS). These compositions can be applied to the propagation materials, in particular seed, in undiluted or, preferably, diluted form. Here, the composition in question can be diluted 2- to 10-fold so that from 0.01 to 60% by weight, preferably from 0.1 to 40% by weight, of active substance are present in the compositions to be used for seed dressing. The application can be carried out before or during the sowing. The treatment of plant propagation material, in particular treatment of seed, is know to a person skilled in the art and is performed by dusting, coating, pelleting, dipping or immersing the plant propagation material, the treatment preferably being carried out by pelleting, coating and dusting or by the in-furrow treatment, so that for example premature germination of the seed is prevented. It is preferred to use suspensions for the seed treatment. Usually, such compositions comprise from 1 to 800 g/l active substance, from 1 to 200 g/l surfactants, from 0 to 200 g/l antifreeze agents, from 0 to 400 g/l binders, from 0 to 200 g/l colorants and solvents, preferably water.

The present invention also relates to a **method for protection of plant propagation material** from pests and/or improving the health of plants, wherein the plant propagation material is treated with an effective amount of the composition according to the invention.

The term "plant propagation material" is to be understood to denote all the genera¬tive parts of the plant such as seeds and vegetative plant material such as cuttings and tubers (e. g. potatoes), which can be used for the multiplication of the plant. This includes seeds, roots, fruits, tubers, bulbs, rhizomes, shoots, sprouts and other parts of plants, including seedlings and young plants, which are to be transplan¬ted after germi¬nation or after emergence from soil. These young plants may also be protected before transplantation by a total or partial treatment by immersion or pouring. In a particular preferred embodiment, the term propagation material denotes seeds.

In general, "pesticidally effective amount" means the amount of the inventive mixtures or of compositions comprising the mixtures needed to achieve an observable effect on growth, including the effects of necrosis, death, retardation, prevention, and removal, destruction, or otherwise diminishing the occurrence and activity of the target organism. The pesticidally effective amount can vary for the various mixtures / compositions used in the invention. A pesticidally effective amount of the mixtures / compositions will also vary according to the prevailing conditions such as desired pesticidal effect and duration, weather, target species, locus, mode of application, and the like.

For seed treatment application forms, increased yield can be characterized, among others, by the following improved properties of the plant:
increased plant weight; and/or increased plant height; and/or increased biomass such as higher overall fresh weight (FW); and/or increased number of flowers per plant; and/or higher grain and/or fruit yield ; and/or more tillers or side shoots (branches); and/or larger leaves; and/or increased shoot growth; and/or increased protein content; and/or increased oil content; and/or increased starch content; and/or increased pigment content; and/or increased chlorophyll content (chlorophyll content has a positive correlation with the plant's photosynthesis rate and accordingly, the higher the chlorophyll content the higher the yield of a plant), increased quality of a plant.

"Grain" and "fruit" are to be understood as any plant product which is further utilized after harvesting, e.g. fruits in the proper sense, vegetables, nuts, grains, seeds, wood (e.g. in the case of silviculture plants), flowers (e.g. in the case of gardening plants, ornamentals) etc., that is anything of economic value that is produced by the plant.

According to the present invention, the yield is increased by at least 4%. In general, the yield increase may even be higher, for example 5 to 10 %, more preferable by 10 to 20 %, or even 20 to 30 %

According to the present invention, the yield - if measured in the absene of prest pres-sure - is increased by at least 2 % In general, the yield increase may even be higher, for example until until 4%-5% or even more.

Another indicator for the condition of the plant is the plant vigor. The plant vigor becomes manifest in several aspects such as the general visual appearance.

For seed treatment applications, improved plant vigor can be characterized, among oth-ers, by the following improved properties of the plant: improved vitality of the plant; and/or improved plant growth; and/or improved plant development; and/or improved visual appearance; and/or improved plant stand (less plant verse/lodging); and/or im-proved emergence; and/or enhanced root growth and/or more developed root system; and/or enhanced nodulation, in particular rhizobial nodulation; and/or increased plant height; and/or increased tiller number; and/or increased number of side shoots; and/or increased number of flowers per plant; and/or increased shoot growth; and/or less non-productive tillersand/or less input needed (such as fertilizers or water); and/or less seeds needed; and/or stronger and/or more productive tillersand/or improved quality of seeds (for being seeded in the following seasons for seed production); and/or field es-tablishment.

Another indicator for the condition of the plant is the "quality" of a plant and/or its prod-ucts. According to the present invention, enhanced quality means that certain plant characteristics such as the content or composition of certain ingredients are increased or improved by a measurable or noticeable amount over the same factor of the plant pro-duced under the same conditions, but without the application of the mixtures of the present invention. Enhanced quality can be characterized, among others, by following improved properties of the plant or its product: increased nutrient content; and/or in-creased protein content; and/or increased oil content; and/or increased starch content; and/or increased content of fatty acids; and/or increased metabolite content; and/or increased carotenoid content; and/or increased sugar content; and/or increased amount of essential amino acids; and/or improved nutrient composition; and/or improved protein composition; and/or improved composition of fatty acids; and/or improved metabolite composition; and/or improved carotenoid composition; and/or improved sugar composition; and/or improved amino acids composition ; and/or improved or optimal fruit color; and/or improved leaf color; and/or higher storage capacity; and/or better processability of the harvested products.

Another indicator for the condition of the plant is the plant's tolerance or resistance to biotic and/or abiotic stress factors. Biotic and abiotic stress, especially over longer terms, can have harmful effects on plants.

Biotic stress is caused by living organisms while abiotic stress is caused for example by environmental extremes. According to the present invention, "enhanced tolerance or resistance to biotic and/or abiotic stress factors" means (1.) that certain negative factors caused by biotic and/or abiotic stress are diminished in a measurable or noticeable amount as compared to plants exposed to the same conditions, but without being treated with an inventive mixture and (2.) that the negative effects are not diminished by a direct action of the inventive mixture on the stress factors, e.g. by its fungicidal or insecticidal action which directly destroys the microorganisms or pests, but rather by a stimulation of the plants' own defensive reactions against said stress factors.

Negative factors caused by abiotic stress are also well-known and can often be observed as reduced plant vigor (see above), for example:
less yield and/or less vigor, for both effects examples can be burned leaves, less flowers, premature ripening, later crop maturity, reduced nutritional value amongst others.

Negative factors caused by abiotic stress are also well-known and can often be observed as reduced plant vigor (see above), for example:
less crop yield and/or less vigor, for both effects examples are burned leaves, less flowers, premature ripening, later crop maturity, reduced nutritional value.
Abiotic stress can be caused for example by: extremes in temperature such as heat or cold (heat stress / cold stress); and/or strong variations in temperature; and/or tem-peratures unusual for the specific season; and/or drought (drought stress); and/or ex-treme wetness; and/or high salinity (salt stress); and/or radiation (for example by in-creased UV radiation due to the decreasing ozone layer); and/or increased ozone levels (ozone stress); and/or organic pollution (for example by phythotoxic amounts of pesticides); and/or inorganic pollution (for example by heavy metal contaminants).

As a result of biotic and/or abiotic stress factors, the quantity and the quality of the stressed plants decrease. As far as quality (as defined above) is concerned, reproductive development is usually severely affected with consequences on the crops which are important for fruits or seeds. Synthesis, accumulation and storage of proteins are mostly affected by temperature; growth is slowed by almost all types of stress; polysaccharide synthesis, both structural and storage is reduced or modified: these effects result in a decrease in biomass (yield) and in changes in the nutritional value of the product.

As pointed out above, the above identified indicators for the health condition of a plant may be interdependent and may result from each other. For example, an increased resistance to biotic and/or abiotic stress may lead to a better plant vigor, e.g. to better and bigger crops, and thus to an increased yield. Inversely, a more developed root sys-tem may result in an increased resistance to biotic and/or abiotic stress. However, these interdependencies and interactions are neither all known nor fully understood and therefore the different indicators are described separately.

The seed treatment compositions comprising the composition according to the invention can also comprise or may be applied together and/or sequentially with further active compounds. These further useful active compounds can be fertilizers or micronutrient donors (such as Mo, Zn and / or Co).

Normally, a tank-mix formulation for seed treatment application comprises 0.25 to 80 percent, especially 1 to 75 percent, of the desired ingredients, and 99.75 to 20 percent, especially 99 to 25 percent, of a solid or liquid auxiliaries (including, for example, a solvent such as water), where the auxiliaries can be a surfactant in an amount of 0 to 40 percent, especially 0.5 to 30 percent, based on the tank-mix formulation.

Typically, a pre-mix formulation for seed treatment application comprises 0.5 to 99.9 percent, especially 1 to 95 percent, of the desired ingredients, and 99.5 to 0.1 percent, especially 99 to 5 percent, of a solid or liquid adjuvant (including, for example, a solvent such as water), where the auxiliaries can be a surfactant in an amount of 0 to 50 percent, especially 0.5 to 40 percent, based on the pre-mix formulation. Whereas commercial products will preferably be formulated as concentrates (e.g., pre- mix composition (formulation)), the end user will normally employ dilute formulations (e.g., tank mix composition).

Seed treatment methods for applying or treating inventive mixtures and compositions thereof to plant propagation material, especially seeds, are known in the art, and include dressing, coating, filmcoating, pelleting and soaking application methods of the propagation material. Such methods are also applicable to the combinations according to the invention. In a preferred embodiment, the inventive mixture is applied or treated on to the plant propagation material by a method such that the germination is not negatively impacted
Accordingly, examples of suitable methods for applying (or treating) a plant propagation material, such as a seed, is seed dressing, seed coating or seed pelleting and alike.
It is preferred that the plant propagation material is a seed, seed piece (i.e. stalk) or seed bulb. Although it is believed that the present method can be applied to a seed in any physiological state, it is preferred that the seed be in a sufficiently durable state that it incurs no damage during the treatment process. Typically, the seed would be a seed that had been harvested from the field; removed from the plant; and separated from any cob, stalk, outer husk, and surrounding pulp or other non-seed plant material. The seed would preferably also be biologically stable to the extent that the treatment would cause no biological damage to the seed. It is believed that the treatment can be applied to the seed at any time between harvest of the seed and sowing of the seed or during the sowing process (seed directed applications). The seed may also be primed either before or after the treatment.

Even distribution of the ingredients in inventive mixtures and adherence thereof to the seeds is desired during propagation material treatment. Treatment could vary from a thin film (dressing) of the formulation containing the combination, for example, a mixture of active ingredient(s), on a plant propagation material, such as a seed, where the original size and/or shape are recognizable to an intermediary state (such as a coating) and then to a thicker film (such as pelleting with many layers of different materials (such as carriers, for example, clays; different formulations, such as of other active ingredients; polymers; and colourants) where the original shape and/or size of the seed is no longer recognizable.

An aspect of the present invention includes application of the inventive mixtures onto the plant propagation material in a targeted fashion, including positioning the ingredients in the combination onto the entire plant propagation material or on only parts thereof, including on only a single side or a portion of a single side. One of ordinary skill in the art would understand these application methods from the description provided in EP954213B1 and WO06/112700.

The inventive mixtures can also be used in form of a "pill" or "pellet" or a suitable substrate and placing, or sowing, the treated pill, or substrate, next to a plant propagation material. Such techniques are known in the art, particularly in EP1124414, WO07/67042, and WO07/67044. Application of the combinations described herein onto plant propagation material also includes protecting the plant propagation material treated with the combination of the present invention by placing one or more pesticide-containing particles next to a pesticide-treated seed, wherein the amount of pesticide is such that the pesticide-treated seed and the pesticide- containing particles together contain an Effective Dose of the pesticide and the pesticide dose contained in the pesticide-treated seed is less than or equal to the Maximal Non-Phytotoxic Dose of the pesticide. Such techniques are known in the art, particularly in WO2005/120226.

Application of the combinations onto the seed also includes controlled release coatings on the seeds, wherein the ingredients of the combinations are incorporated into materials that release the ingredients over time. Examples of controlled release seed treatment technologies are generally known in the art and include polymer films, waxes, or other seed coatings, wherein the ingredients may be incorporated into the controlled release material or applied between layers of materials, or both.

Seed can be treated by applying thereto the compound s present in the inventive mixtures in any desired sequence or simultaneously.

The seed treatment occurs to an unsown seed, and the term "unsown seed" is meant to include seed at any period between the harvest of the seed and the sowing of the seed in the ground for the purpose of germination and growth of the plant.

Treatment to an unsown seed is not meant to include those practices in which the active ingredient is applied to the soil but would include any application practice that would target the seed during the planting process.

Preferably, the treatment occurs before sowing of the seed so that the sown seed has been pretreated with the combination. In particular, seed coating or seed pelleting are preferred in the treatment of the combinations according to the invention. As a result of the treatment, the ingredients in each combination are adhered on to the seed and therefore available for pest control.

The treated seeds can be stored, handled, sowed and tilled in the same manner as any other active ingredient treated seed.

When employed in plant protection by seed treatment, the amount of the composition is in the range from 0.01-10kg, preferably from 0.1-1000 g, more preferably from 1-100 g per 100 kilogram of plant propagation material (preferably seeds).

The health of plants of the abovementioned type is carried out in a manner known per se to those skilled in the art, depending on the intended aims and prevailing circumstances.

In the control of animal pest, the inventive mixtures can be applied to any and all developmental stages of pests, such as egg, larva, pupa, and adult. The pests may be controlled by contacting the target pest, its food supply, habitat, breeding ground or its locus with a pesticidally effective amount of the inventive mixtures or of compositions comprising the mixtures.

"Locus" means a plant, plant propagation material (preferably seed), soil, area, material or environment in which a pest is growing or may grow.

When preparing the inventive mixtures, it is preferred to employ the pure active compounds, to which further active compounds against pests, such as insecticides, herbicides, fungicides or else herbicidal or growth-regulating active compounds or fertilizers can be added as further active components according to need.

As said above, the present invention comprises a method for controlling pests, that means animal pests and/or harmful fungi, wherein the pest, their habitat, breeding grounds, their locus or the plants to be protected against pest attack, the soil or plant propagation material (preferably seed) are treated with an pesticidally effective amount of a mixture.

Advantageously, the inventive mixtures are suitable for controlling the following fungal plant diseases:
*Albugo* spp*.* (white rust) on ornamentals, vegetables (e. g. *A. candida*) and sunflowers (e. g. *A. tragopogonis*)*; Alternaria* spp*.* (Alternaria leaf spot) on vegetables, rape (*A.* Most preferred plants are corn, soybean and OSR/canola.

The term " plants" is also to be understood as including plants which have been modified by breeding, mutagenesis or genetic engineering including but not limiting to agricultural biotech products on the market or in development (cf. http:// cera-gmc. org, see GM crop database therein). Genetically modified plants are plants, which genetic material has been so modified by the use of recombinant DNA techniques that under natural circumstances cannot readily be obtained by cross breeding, mutations or natural recombination. Typically, one or more genes have been integrated into the genetic material of a genetically modified plant in order to improve certain properties of the plant. Such genetic modifications also include but are not limited to targeted post-translational modification of protein(s), oligo- or polypeptides e. g. by glycosylation or polymer additions such as prenylated, acetylated or farnesylated moieties or PEG moieties. Plants that have been modified by breeding, mutagenesis or genetic engineering, e. g. have been rendered tolerant to applications of specific classes of herbicides, such as auxin herbicides such as dicamba or 2,4-D; bleacher herbicides such as hydroxylphenylpyruvate dioxygenase (HPPD) inhibitors or phytoene desaturase (PDS) inhibittors; acetolactate synthase (ALS) inhibitors such as sulfonyl ureas or imidazolinones; enolpyruvylshikimate-3-phosphate synthase (EPSPS) inhibitors, such as glyphosate; glutamine synthetase (GS) inhibitors such as glufosinate; protoporphyrinogen-IX oxidase inhibitors; lipid biosynthesis inhibitors such as acetyl CoA carboxylase (ACCase) inhibitors; or oxynil (i. e. bromoxynil or ioxynil) herbicides as a result of conventional methods of breeding or genetic engineering. Furthermore, plants have been made resistant to multiple classes of herbicides through multiple genetic modifications, such as resistance to both glyphosate and glufosinate or to both glyphosate and a herbicide from another class such as ALS inhibitors, HPPD inhibitors, auxin herbicides, or ACCase inhibitors. These herbicide resistance technologies are e. g. described in Pest Managem. Sci. 61, 2005, 246; 61, 2005, 258; 61, 2005, 277; 61, 2005, 269; 61, 2005, 286; 64, 2008, 326; 64, 2008, 332; Weed Sci. 57, 2009, 108; Austral. J. Agricult. Res. 58, 2007, 708; Science 316, 2007, 1185; and references quoted therein. Several cultivated plants have been rendered tolerant to herbicides by conventional methods of breeding (mutagenesis), e. g. Clearfield® summer rape (Canola, BASF SE, Germany) being tolerant to imidazolinones, e. g. imazamox, or ExpressSun® sunflowers (DuPont, USA) being tolerant to sulfonyl ureas, e. g. tribenuron. Genetic engineering methods have been used to render cultivated plants such as soybean, cotton, corn, beets and rape, tolerant to herbicides such as glyphosate and glufosinate, some of which are commercially available under the trade names RoundupReady® (glyphosate-tolerant, Monsanto, U.S.A.), Cultivance® (imidazolinone tolerant, BASF SE, Germany) and LibertyLink® (glufosinate-tolerant, Bayer CropScience, Germany).
Furthermore, plants are also covered that are by the use of recombinant DNA techniques capable to synthesize one or more insecticidal proteins, especially those known from the bacterial genus *Bacillus,* particularly from *Bacillus thuringiensis,* such as δ-endotoxins, e. g. CryIA(b), CryIA(c), CryIF, CryIF(a2), CryIIA(b), CryIIIA, CryIIIB(b1) or Cry9c; vegetative insecticidal proteins (VIP), e. g. VIP1, VIP2, VIP3 or VIP3A; insecticidal proteins of bacteria colonizing nematodes, e. g. *Photorhabdus* spp. or *Xenorhabdus* spp.; toxins produced by animals, such as scorpion toxins, arachnid toxins, wasp toxins, or other insect-specific neurotoxins; toxins produced by fungi, such Streptomycetes toxins, plant lectins, such as pea or barley lectins; agglutinins; proteinase inhibitors, such as trypsin inhibitors, serine protease inhibitors, patatin, cystatin or papain inhibitors; ribosome-inactivating proteins (RIP), such as ricin, maize-RIP, abrin, luffin, saporin or bryodin; steroid metabolism enzymes, such as 3-hydroxysteroid oxidase, ecdysteroid-IDP-glycosyl-transferase, cholesterol oxidases, ecdysone inhibitors or HMG-CoA-reductase; ion channel blockers, such as blockers of sodium or calcium channels; juvenile hormone esterase; diuretic hormone receptors (helicokinin receptors); stilben synthase, bibenzyl synthase, chitinases or glucanases. In the context of the present invention these insecticidal proteins or toxins are to be understood expressly also as pre-toxins, hybrid proteins, truncated or otherwise modified proteins. Hybrid proteins are characterized by a new combination of protein domains, (see, e. g. WO 02/015701). Further examples of such toxins or genetically modified plants capable of synthesizing such toxins are disclosed, e. g., in EP-A 374 753, WO 93/007278, WO 95/34656, EP-A 427 529, EP-A 451 878, WO 03/18810 und WO 03/52073. The methods for producing such genetically modified plants are generally known to the person skilled in the art and are described, e. g. in the publications mentioned above. These insecticidal proteins contained in the genetically modified plants impart to the plants producing these proteins tolerance to harmful pests from all taxonomic groups of athropods, especially to beetles (Coeloptera), two-winged insects (Diptera), and moths (Lepidoptera) and to nematodes (Nematoda). Genetically modified plants capable to synthesize one or more insecticidal proteins are, e. g., described in the publications mentioned above, and some of which are commercially available such as YieldGard® (corn cultivars producing the Cry1Ab toxin), YieldGard® Plus (corn cultivars producing Cry1Ab and Cry3Bb1 toxins), Starlink® (corn cultivars producing the Cry9c toxin), Herculex® RW (corn cultivars producing Cry34Ab1, Cry35Ab1 and the enzyme Phosphinothricin-N-Acetyltransferase [PAT]); NuCOTN® 33B (cotton cultivars producing the Cry1Ac toxin), Bollgard® I (cotton cultivars producing the Cry1Ac toxin), Bollgard® II (cotton cultivars producing Cry1Ac and Cry2Ab2 toxins); VIPCOT® (cotton cultivars producing a VIP-toxin); NewLeaf® (potato cultivars producing the Cry3A toxin); Bt-Xtra®, NatureGard®, KnockOut®, BiteGard®, Protecta®, Bt11 (e. g. Agrisure® CB) and Bt176 from Syngenta Seeds SAS, France, (corn cultivars producing the Cry1Ab toxin and PAT enyzme), MIR604 from Syngenta Seeds SAS, France (corn cultivars producing a modified version of the Cry3A toxin, c.f. WO 03/018810), MON 863 from Monsanto Europe S.A., Belgium (corn cultivars producing the Cry3Bb1 toxin), IPC 531 from Monsanto Europe S.A., Belgium (cotton cultivars producing a modified version of the Cry1Ac toxin) and 1507 from Pioneer Overseas Corporation, Belgium (corn cultivars producing the Cry1F toxin and PAT enzyme). Furthermore, plants are also covered that are by the use of recombinant DNA techniques capable to synthesize one or more proteins to increase the resistance or tolerance of those plants to bacterial, viral or fungal pathogens. Examples of such proteins are the so-called "pathogenesis-related proteins" (PR proteins, see, e. g. EP-A 392 225), plant disease resistance genes (e. g. potato cultivars, which express resistance genes acting against *Phytophthora infestans* derived from the mexican wild potato *Solanum bulbocastanum*) or T4-lysozym (e. g. potato cultivars capable of synthesizing these proteins with increased resistance against bacteria such as *Erwinia amylvora*)*.* The methods for producing such genetically modified plants are generally known to the person skilled in the art and are described, e. g. in the publications mentioned above.
Furthermore, plants are also covered that are by the use of recombinant DNA techniques capable to synthesize one or more proteins to increase the productivity (e. g. bio mass production, grain yield, starch content, oil content or protein content), tolerance to drought, salinity or other growth-limiting environmental factors or tolerance to pests and fungal, bacterial or viral pathogens of those plants.
Furthermore, plants are also covered that contain by the use of recombinant DNA techniques a modified amount of substances of content or new substances of content, specifically to improve human or animal nutrition, e. g. oil crops that produce health-promoting long-chain omega-3 fatty acids or unsaturated omega-9 fatty acids (e. g. Nexera® rape, DOW Agro Sciences, Canada).
Furthermore, plants are also covered that contain by the use of recombinant DNA techniques a modified amount of substances of content or new substances of content, specifically to improve raw material production, e. g. potatoes that produce increased amounts of amylopectin (e. g. Amflora® potato, BASF SE, Germany).
**Advantages** of the present invention are, inter alia, that it makes a high storage stability of the formulation possible; that the particle size growth of dispersed agrochemical active substances is slowed down or suppressed; that the agglomeration of dispersed agrochemical particles is slowed down or suppressed; that the settling of dispersed agrochemical active substances is slowed down or suppressed; that the abovementioned advantages are also attained in the presence of high salt concentrations.

The examples which follow illustrate the invention.

### Example 1

Aqueous suspension concentrates were prepared containing 16,7 g/l fluxapyroxad, 16,7 g/l pyraclostrobin, 13,3 g/l metalaxyl, 12 g/l polyarylphenyl ethersulfate ammonium salt, 25 g/l acrylic graft polymer surfactant, 20 g/l sodium salt of naphthalene sulfonate condensate, 200 g/l of a glycol, 45 g/l of blue color pigments, and water up to 1,0 I. Additinally, xanthan gum and Cellulose ether A (methylhydroxypropylcellulose, solid, water solubility below 10 g/l at 20 °C, about 29 wt% methoxy groups, about 8-11 wt% hydroxypropoxy groups, kinematic viscosity about 3 mPas at 20 °C according to Ubbelohde with a 2 wt% (dry cellolose ether) aqueous solution) were added as indicated in Table 1. The concentration of Cellulose ether A and xanthan gum was adjusted in such a way that the suspension concentrates A, B and COMP had a similar viscosity, as determined by the standard flow cup method according to AFNOR norm NF T 30-014 (60-63 s).

**Table 1:**

| | COMP ^{a)} | A | B |
|---|---|---|---|
| Cellulose ether A | - | 81 | 30 |
| Xanthan gum | 2,9 | 0,3 | 1,3 |

| | | | |
|---|---|---|---|
| a) Comparative example | | | |

The increase of particle size D90 was analyezed after preparation, 2 and 4 months storage by dynamic light scattering. Table 2 showed that the particle size in the suspension concentrates A and B increase to a lower degree compared to the suspension concentrates COMP.

**Table 2: Particle size D90 [%]**

| Storage time | COMP ^{a)} | A | B |
|---|---|---|---|
| Start, µm | 4,1 | 4,0 | 4,2 |
| Start, % | 100 | 100 | 100 |
| 2 months at 40 °C | 141 | 115 | 121 |
| 4 months at 40 °C | 161 | 123 | 129 |

### Example 2

Aqueous suspension concentrates were prepared containing 16,7 g/l fluxapyroxad, 16,7 g/l pyraclostrobin, 13,3 g/l metalaxyl, 10 g/l sodium salt of naphthalene sulfonate condensate, 200 g/l of a glycol, 10 g/l water soluble ethylene oxide propylene oxide block polymer with a molar mass of about 7000 D, 60 g/l of blue color pigments, 10 g/l sodium salt of a condensation product of phenolsulfonic acid-urea-formaldehyde, and water up to 1,0 I. Additinally, xanthan gum and cellulose ether were added as indicated in Table 3. The concentration of Cellulose ether A and xanthan gum was adjusted in such a way that the suspension concentrates A and COMP had a similar viscosity, as determined by the standard flow cup method according to AFNOR norm NF T 30-014 (55-61 s).

**Table 3:**

| | COMP ^{a)} | A |
|---|---|---|
| Cellulose ether A | - | 15 |
| Xanthan gum | 2,9 | 1,6 |

| | | |
|---|---|---|
| a) Comparative example | | |

The increase of particle size D90 was analyezed after preparation (4,2 µm for COMP, 4,1 µm for A), 2 and 4 months storage by dynamic light scattering. Table 4 showed that the particle size in the suspension concentrates A increased to a lower degree compared to the suspension concentrates COMP.

**Table 4: Particle size D90 [%]**

| Storage time | COMP ^{a)} | A |
|---|---|---|
| Start | 100 | 100 |
| 2 months at 40 °C | 136 | 122 |
| 4 months at 40 °C | 186 | 122 |

| | | |
|---|---|---|
| a) Comparative example | | |

### Example 3

Aqueous suspension concentrates were prepared containing 16,7 g/l fluxapyroxad, 16,7 g/l pyraclostrobin, 13,3 g/l metalaxyl, 10 g/l sodium salt of naphthalene sulfonate condensate, 200 g/l of a glycol, 10 g/l water soluble ethylene oxide propylene oxide block polymer with a molar mass of about 7000 D, 60 g/l of blue color pigments, 10 g/l sodium salt of a condensation product of phenolsulfonic acid-urea-formaldehyde, and water up to 1,0 I. Additinally, xanthan gum and cellulose ether were added as indicated in Table 5. The concentration of Cellulose ether A and xanthan gum was adjusted in such a way that the suspension concentrates A and COMP had a similar viscosity, as determined by the standard flow cup method according to AFNOR norm NF T 30-014 (57-58 s).

**Table 5:**

| | COMP ^{a)} | A |
|---|---|---|
| Cellulose ether A | - | 15 |
| Xanthan gum | 2,8 | 1,9 |

| | | |
|---|---|---|
| a) Comparative example | | |

The increase of particle size D90 was analyezed after preparation (D90=3,9 µm and D50=1,3 µm for COMP, D90=3,9 µm and D50=1,2 µm for A), 2 and 4 months storage by dynamic light scattering. Table 6 showed that the particle size in the suspension concentrates A increased to a lower degree compared to the suspension concentrates COMP.

**Table 6: Particle size D90 [%]**

| Storage time | COMP ^{a)} | A |
|---|---|---|
| Start | 100 | 100 |
| 3 months at 40 °C | 200 | 154 |

| | | |
|---|---|---|
| a) Comparative example | | |

### Example 4

Aqueous suspension concentrates were prepared containing 50 g/l fluxapyroxad, 50 g/l triticonazole, 50.2 g/l glycerol, 9 g/l sodium salt of polyarylphenyl ethersulfate ammonium salt, 20.1 g/l acrylic graft polymer surfactant, 200 g/l castor oil ethoxylate, 1.6 g/l xantham gum, 4.0 g/l silicon defoamer, and water up to 1.0 I. Additionally, Cellulose ether A and xantham gum were added as indicated in Table 6. The suspension concentrates A and COMP-A had similar viscosity, as determined by the standard flow cup method according to AFNOR norm NF T 30-014 (52-53 s).

**Table 6**

| | COMP-A ^{a)} | A |
|---|---|---|
| Cellulose ether A | - | 10 |
| Xanthan gum | 1.6 | 1.6 |

| | | |
|---|---|---|
| a) Comparative example | | |

The storage stability of COMP-A and A was tested with a sample at a daily cycling temperature from -5 °C to +30 °C for eight weeks, and with another sample at 20 °C for eight weeks, with another sample at 40 °C for eight weeks and with another sample at 54 °C for eight weeks, respectively.

The particle size of the pesticide particles was determined before and after storage by Malvern Mastersizer 2000. The results were summarized in Table 7.

**Table 7: Particle size D90 [%]**

| | COMP-A ^{a)} | A |
|---|---|---|
| Start | 100 | 100 |
| -5/30 °C | 166 | 112 |
| 20 °C | 124 | 100 |
| 40 °C | 167 | 103 |
| 54 °C | 188 | 125 |

Table 7 showed that the particle size in the suspension concentrates A increased to a lower degree compared to the suspension concentrates COMP-A at all tested conditions.

## Claims

1. An aqueous composition comprising
- a water-insoluble pesticide in form of suspended particles,
- a cellulose ether selected from methylhydroxypropyl cellulose, and
- a thickener selected from inorganic clays or from polysaccharides which are different from the cellulose ether.

2. The composition according to claim 1, where the cellulose ether has a solubility in water of at least 10 g/l at 20 °C.

3. The composition according to claims 1 or 2, where the cellulose ether has a kinematic viscosity of up to 500 mPas at 20 °C.

4. The composition according to any of claims 1 to 3, where the thickener is selected from polysaccharides which are different from the cellulose ether.

5. The composition according to any of claims 1 to 4, where the thickener is xanthan gum.

6. The composition according to any of claims 1 to 5 comprising 5 to 30 g/l of the cellulose ether.

7. The composition according to any of claims 1 to 6, comprising up to 2 g/l of the thickener.

8. The composition according to any of claims 1 to 7, where the cellulose ether contains 15 to 40 wt%, preferably 22 to 35 wt% methoxy groups.

9. The composition according to any of claims 1 to 8, where the cellulose ether contains 3 to 30 wt%, preferably 5 to 18 wt%, hydroxypropoxy groups.

10. A method of preparing the composition as defined in any of claims 1 to 9, by bringing the water-insoluble pesticide, the methylhydroxypropyl cellulose and the thickener into contact.

11. A use of the cellulose ether as defined in any of claims 1 to 9 for reducing the crystal growth of a water-insoluble pesticide in form of suspended particles in an aqueous composition.

12. A method of controlling phytopathogenic fungi and/or undesired plant growth and/or undesired insect or mite attack and/or for regulating the growth of plants, wherein the composition as defined in any of claims 1 to 9 is allowed to act on the respective pests, their environment or the crop plants to be protected from the respective pest, on the soil and/or on undesired plants and/or on the crop plants and/or on their environment.

13. Seed comprising the composition as defined in any of claims 1 to 9.

14. A method for protection of plant propagation material from pests and/or improving the health of plants, wherein the plant propagation material is treated with an effective amount of the composition as defined in any of claims 1 to 9.

## Patentansprüche

1. Wässrige Zusammensetzung, umfassend
- ein wasserunlösliches Pestizid in Form von suspendierten Teilchen,
- einen Zelluloseether, ausgewählt aus Methylhydroxypropylzellulose, und
- ein Verdickungsmittel, ausgewählt aus anorganischen Tonen oder aus Polysacchariden, die sich vom Zelluloseether unterscheiden.

2. Zusammensetzung nach Anspruch 1, wobei der Zelluloseether eine Wasserlöslichkeit von mindestens 10g/l bei 20°C aufweist.

3. Zusammensetzung nach den Ansprüchen 1 oder 2, wobei der Zelluloseether eine kinematische Viskosität von bis zu 500 mPas bei 20°C aufweist.

4. Zusammensetzung nach einem der Ansprüche 1 bis 3, wobei das Verdickungsmittel aus Polysacchariden, die sich vom Zelluloseether unterscheiden, ausgewählt ist.

5. Zusammensetzung nach einem der Ansprüche 1 bis 4, wobei es sich bei dem Verdickungsmittel um Xanthangummi handelt.

6. Zusammensetzung nach einem der Ansprüche 1 bis 5, das den Zelluloseether in einer Menge von 5 bis 30 g/l umfasst.

7. Zusammensetzung nach einem der Ansprüche 1 bis 6, das das Verdickungsmittel in einer Menge von bis zu 2 g/l umfasst.

8. Zusammensetzung nach einem der Ansprüche 1 bis 7, wobei der Zelluloseether 15 bis 40 Gew.-%, vorzugsweise 22 bis 35 Gew.-% Methoxygruppen enthält.

9. Zusammensetzung nach einem der Ansprüche 1 bis 8, wobei der Zelluloseether 3 bis 30 Gew.-%, vorzugsweise 5 bis 18 Gew.-% Hydroxypropoxygruppen enthält.

10. Verfahren zur Herstellung der Zusammensetzung wie in einem der Ansprüche 1 bis 9 definiert durch Inkontaktbringen des wasserunlöslichen Pestizids, der Methylhydroxypropylzellulose und des Verdickungsmittels.

11. Verwendung des Zelluloseethers wie in einem der Ansprüche 1 bis 9 definiert zum Vermindern des Kristallwachstums in einem wasserunlöslichen Pestizid in Form von suspendierten Teilchen in einer wässrigen Zusammensetzung.

12. Verfahren zum Bekämpfen von phytopathogenen Pilzen und/oder unerwünschtem Pflanzenwuchs und/oder unerwünschtem Insekten- oder Milbenbefall und/oder zum Regulieren des Wachstums von Pflanzen, wobei man die Zusammensetzung wie in einem der Ansprüche 1 bis 9 definiert auf die jeweiligen Schädlinge, ihre Umwelt oder die Kulturpflanzen, die gegen den jeweiligen Schädling zu schützen sind, auf dem Boden und/oder auf unerwünschte Pflanzen und/oder auf die Kulturpflanzen und/oder ihre Umwelt einwirken lässt.

13. Saatgut, das die Zusammensetzung wie in einem der Ansprüche 1 bis 9 definiert umfasst.

14. Verfahren zum Schützen von pflanzlichem Vermehrungsgut gegen Schädlinge und/oder zum Verbessern der Gesundheit von Pflanzen, wobei das pflanzliche Vermehrungsgut mit einer wirksamen Menge der Zusammensetzung wie in einem der Ansprüche 1 bis 9 definiert behandelt wird.

## Revendications

1. Composition aqueuse, comprenant
- un pesticide insoluble dans l'eau sous la forme de particules en suspension,
- un éther de cellulose choisi parmi la méthylhydroxy propylcellulose, et
- un épaississant choisi parmi les argiles inorganiques ou parmi les polysaccharides qui sont différents de l'éther de cellulose.

2. Composition selon la revendication 1, dans laquelle l'éther de cellulose possède une solubilité dans l'eau d'au moins 10 g/l à 20°C.

3. Composition selon les revendications 1 ou 2, dans laquelle l'éther de cellulose possède une viscosité cinématique allant jusqu'à 500 mPa.s à 20°C.

4. Composition selon l'une quelconque des revendications 1 à 3, dans laquelle l'épaississant est choisi parmi les polysaccharides qui sont différents de l'éther de cellulose.

5. Composition selon l'une quelconque des revendications 1 à 4, dans laquelle l'épaississant est de la gomme xanthane.

6. Composition selon l'une quelconque des revendications 1 à 5, comprenant de 5 à 30 g/l de l'éther de cellulose.

7. Composition selon l'une quelconque des revendications 1 à 6, comprenant jusqu'à 2 g/l de l'épaississant.

8. Composition selon l'une quelconque des revendications 1 à 7, dans laquelle l'éther de cellulose contient de 15 à 40% en poids, préférablement de 22 à 35% en poids, de groupements méthoxy.

9. Composition selon l'une quelconque des revendications 1 à 8, dans laquelle l'éther de cellulose contient de 3 à 30% en poids, préférablement de 5 à 18% en poids, de groupements hydroxypropoxy.

10. Méthode de préparation de la composition telle que définie selon l'une quelconque des revendications 1 à 9, par la mise en contact du pesticide insoluble dans l'eau, de la méthylhydroxy propylcellulose et de l'épaississant.

11. Utilisation de l'éther de cellulose tel que défini selon l'une quelconque des revendications 1 à 9, pour la réduction de la croissance de cristaux d'un pesticide insoluble dans l'eau sous la forme de particules en suspension dans une composition aqueuse.

12. Méthode de contrôle de champignons phytopathogènes et/ou d'une croissance non désirée de plantes et/ou d'une attaque non désirée d'insectes ou d'acariens et/ou de régulation de la croissance de plantes, où l'on permet à la composition telle que définie selon l'une quelconque des revendications 1 à 9 d'agir sur les nuisibles respectifs, leur environnement ou les plantes de culture devant être protégées contre le nuisible respectif, sur le sol et/ou sur les plantes non désirées et/ou sur les plantes de culture et/ou sur leur environnement.

13. Semence comprenant la composition telle que définie selon l'une quelconque des revendications 1 à 9.

14. Méthode de protection de matériel de propagation végétal contre des nuisibles et/ou d'amélioration de la santé de plantes, où le matériel de propagation végétal est traité par une quantité efficace de la composition telle que définie selon l'une quelconque des revendications 1 à 9.
